# EUROPÄISCHE PATENTSCHRIFT

(11) **EP 2 190 694 B1**
(45) Veröffentlichungstag und Bekanntmachung des Hinweises auf die Patenterteilung: **10.07.2013**
(21) Anmeldenummer: 08804163.7
(22) Anmeldetag: 12.09.2008
(51) Int. Cl.: B60Q 1/52

(54) **ABSTANDSLEUCHTE IM PERSONEN- UND/ODER WARENVERKEHR**
SPACER LAMP IN PASSENGER AND/OR GOODS TRAFFIC
FEU D'ESPACEMENT POUR LE TRANSPORT DE PERSONNES ET/OU DE MARCHANDISES

(30) Priorität: 20.09.2007 DE 102007045107
(43) Veröffentlichungstag der Anmeldung: 02.06.2010
(73) Patentinhaber: Magna Steyr Fahrzeugtechnik AG & Co. KG, 8041 Graz (AT)
(72) Erfinder: PUSCH, Gereon Johannes, A-8042 Graz (AT)
(74) Vertreter: Rausch, Gabriele
(86) Internationale Anmeldenummer: PCT/EP2008/062202
(87) Internationale Veröffentlichungsnummer: WO 2009/040263

(56) Entgegenhaltungen:
- WO-A-00/18594
- GB-A- 2 291 244
- US-A- 3 192 437
- US-A- 3 868 629
- US-A1- 2007 168 129

## Beschreibung

Die Erfindung betrifft eine Abstandsleuchte im Personen- und/oder Warenverkehr, beispielsweise als Abstandswarnleuchte oder Sicherheitsleuchte, mit einem Lichtfeld, welches gemäß einer Leuchtkonfiguration Licht abgibt, wobei das Lichtfeld eine erste und eine zweite Lichtquelle aufweist und eine Steuereinheit zur Steuerung der Leuchtkonfiguration des Lichtfeldes vorgesehen ist, und die erste und die zweite Lichtquelle durch die Steuereinheit ansteuerbar sind und über eine Steuerlogik der ersten und der zweiten Lichtquelle jeweils ein zeitlich veränderlicher Verlauf ihrer Lichtintensität zuordenbar ist.

Aus dem Stand der Technik sind dazu verschiedene technische Lösungen bekannt.

So ist beispielsweise aus der DE 199 52 408 C2 bekannt, ein System zur Vorwarnung oder Vorinformation anderer Verkehrsteilnehmer vorzusehen. Dabei ist vorgesehen, dass ein Fahrzeug in einer Gefahrensituation, beispielsweise bei/nach einer Vollbremsung, den nachfolgenden Verkehr selbsttätig durch die Auslösung entsprechender optischer Signale warnt.

Aus der DE 10 2005 032 921 A1 und WO200018594 A1 ist bekannt, ein Lichtfeld einer Beleuchtungsvorrichtung eines Fahrzeuges durch mehrere Lichtquellen zusammen zu stellen und dadurch verschiedene konstant leuchtende Leuchtkonfigurationen eines Lichtfeldes zu erzeugen.

Aus der US 6,411,204 ist bekannt eine Kollisionswarneinrichtung als Lichtfeld auszuführen, das geeignet angesteuert wird.

Eine Solche Abstandsleuchte ist auch aus US2007/168129 bekant.

Es ist eine Aufgabe der vorliegenden Erfindung den Stand der Technik weiter zu verbessern und insbesondere ein taugliches Mittel zur Einhaltung eines definierten Abstandes von einem Objekt, insbesondere zur Einhaltung eines Sicherheitsabstandes zwischen zwei hintereinander fahrenden Fahrzeugen, zu entwickeln.

Erfindungsgemäß wird diese Aufgabe mit einer Vorrichtung nach Anspruch 1 sowie mit einem Verfahren nach Anspruch 9 gelöst.

Erfindungsgemäß sind die erste und die zweite Lichtquelle durch die Steuereinheit ansteuerbar und ist über eine Steuerlogik der ersten und der zweiten Lichtquelle jeweils ein zeitlich veränderlicher Verlauf ihrer Lichtintensität zuordenbar, wobei die Lichtintensitäten der ersten und der zweiten Lichtquelle in einem vorbestimmten Zeitabstand jeweils gegengleich erhöht und erniedrigt werden können, und die Leuchtkonfiguration des Lichtfeldes mithilfe der Steuereinheit durch Steuerung der ersten und der zweiten Lichtquelle so in Abhängigkeit eines ersten Konfigurationsparameters einstellbar ist, dass das Lichtfeld für das Auge eines durchschnittlichen erwachsenen Menschen bei Annäherung an das Lichtfeld bis zum Erreichen eines, von dem ersten Konfigurationsparameter abhängigen, vordefinierten Abstandes von dem Lichtfeld eine erste, durch eine im Wesentlichen gleich bleibende Lichtintensität gekennzeichnete, Leuchtcharakteristik aufweist und für das Auge eines durchschnittlichen erwachsenen Menschen bei Unterschreiten des vordefinierten Abstandes von dem Lichtfeld entsprechend einer zweiten Leuchtcharakteristik die erste von der zweiten Lichtquelle zumindest teilweise unterscheidbar und die wechselweise zunehmende und abnehmende Lichtintensität der Lichtquellen des Lichtfeldes bewusst wahrnehmbar ist, wobei der vordefinierte Abstand zumindest 0,5 Meter von dem Lichtfeld beträgt.

Nach einer besonderen Ausführungsform beträgt der vordefinierte Abstand zumindest 1 Meter, vorzugsweise zumindest 2 Meter, besonders bevorzugt zumindest 5 bis 10 Meter von dem Lichtfeld.

Nach einer besonderen Ausführungsform der Erfindung dient als Referenz für die Charakterisierung der Leuchtcharakteristik des Lichtfeldes das Auge eines durchschnittlichen erwachsenen Menschen.

Nach einer besonderen Ausführungsform die nicht Teil der Erfindung ist wird als erster Konfigurationsparameter beispielsweise ein Signal eines Schalters (AUS/EIN) oder ein konstanter vordefinierter Wert verwendet.

Nach einer besonderen Ausführungsform der Erfindung ist eine im Wesentlichen gleich bleibende Lichtintensität, durch eine, über das Lichtfeld gemittelt und über einen Zeitraum von mindestens 1 s betrachtet sowie mit dem Auge eines durchschnittlichen erwachsenen Menschen betrachtet, maximale Schwankungsbreite der Lichtintensität des Lichtfeldes von ± 25 % gekennzeichnet.

Nach einer besonderen Ausführungsform der Erfindung weist die Steuereinheit eine Frequenzeinheit auf, durch welche die Lichtintensität der ersten und der zweiten Lichtquelle mit einer Frequenz in einem Bereich zwischen 0,1 Hz und 75 Hz, bevorzugt zwischen 0,1 Hz und 50 Hz, besonders bevorzugt zwischen 0,5 Hz und 10 Hz, beispielsweise zwischen 1 Hz und 5 Hz, geändert werden kann.

Nach einer besonderen Ausführungsform der Erfindung wird/werden die erste und/oder zweite Lichtquelle des Lichtfeldes zumindest teilweise durch eine Anzahl von Leuchtdioden und/oder ein Display gebildet.

Nach einer besonderen Ausführungsform wird die Abstandsleuchte durch mehrere Lichtfelder gebildet, wovon beispielsweise eines oder mehrere der Lichtfelder eine konstante Lichtintensität aufweist/aufweisen.

Nach einer besonderen Ausführungsform der Erfindung ist die Abstandsleuchte als Teil einer Außenbeleuchtung eines Fahrzeuges, beispielsweise als Rücklicht an der Rückseite des Fahrzeuges, ausgeführt.

Nach anderen möglichen Ausführungsformen die nicht Teil des Erfindung sind, ist die Abstandsleuchte als stationäre Beleuchtung, beispielsweise im Straßenverkehr oder in einer Fabrikhalle bei der Zustellung von Waren an ein Montageband, vorgesehen.

Nach einer weiteren bevorzugten Ausführungsform die nicht Teil der Erfindung ist, eignet sich die Abstandsleuchte zur Kennzeichnung von Fluchtwegen oder zur Anbringung an Leuchtreklamevorrichtungen.

Nach der Erfindung ist als erster Konfigurationsparameter eine Geschwindigkeit eines Fahrzeuges vorgesehen.

Nach einer besonderen Ausführungsform der Erfindung ist eine vorbestimmte Grenzgeschwindigkeit des Fahrzeuges als eine Aktivierungsschranke vorgesehen und weist das Lichtfeld unterhalb der Grenzgeschwindigkeit eine im Wesentlichen konstante Lichtintensität auf.

Nach einer besonderen Ausführungsform der Erfindung ist eine Aktivierungseinheit zur Aktivierung und/oder Deaktivierung der konstanten Lichtintensität des Lichtfeldes vorgesehen und weist die Aktivierungseinheit eine Hystereseschleife auf. Dabei kann nach einer besonderen Ausführungsform der Erfindung die Deaktivierungsschranke unter der Aktivierungsschranke, beispielsweise auf die Geschwindigkeit eines Fahrzeuges bezogen, eingestellt werden. Dadurch kann ein fortwährendes Aktivieren und Deaktivieren im Grenzbereich verhindert werden.

Nach der Erfindung ist ein mit der Steuereinheit und dem Lichtfeld verbundener erster Sensor zur Bestimmung des ersten Konfigurationsparameters vorgesehen.

Nach einer besonderen Ausführungsform der Erfindung ist ein zweiter Sensor zur Bestimmung eines zweiten Konfigurationsparameters vorgesehen, wobei über den zweiten Konfigurationsparameter eine Fahrbahnbeschaffenheit und/oder eine Fahrzeugbeschaffenheit und/oder eine Uhrzeit und/oder ein Ortsbestimmungssignals und/oder eine Umgebungshelligkeit abbildbar ist/sind. Nach einer besonderen Ausführungsform der Erfindung ist der Sensor zur Bestimmung des zweiten Konfigurationsparameters mit der Steuereinheit so verbunden, dass die Leuchtkonfiguration des Lichtfeldes in Abhängigkeit des zweiten Konfigurationsparameters änderbar ist.

Nach der Erfindung weist das Lichtfeld mit der ersten und der zweiten Lichtquelle und gegebenenfalls zusätzlichen Lichtquellen eine Anzahl von aktivierbaren Lichtquellen auf und ist durch die Steuerlogik durch eine ausgewählte Aktivierung von Lichtquellen aus der Anzahl der aktivierbaren Lichtquellen oder durch eine örtliche Verstellung einzelner aktiver Lichtquellen der Abstand zwischen den aktiven Lichtquellen in dem Lichtfeld in Abhängigkeit des ersten Konfigurationsparameters einstellbar ist.

Nach einer besonderen Ausführungsform ist, beispielsweise durch einen entsprechenden Aktuator, der Abstand der ersten zur zweiten Lichtquelle verstellbar.

Die Erfindung ist ferner durch ein Verfahren nach Anspruch 9 gekennzeichnet.

Nach dem erfindungsgemäßen Verfahren werden die erste und die zweite Lichtquelle durch die Steuereinheit angesteuert und wird der ersten und der zweiten Lichtquelle jeweils ein zeitlich veränderlicher Verlauf ihrer Lichtintensität zugeordnet, wobei die Lichtintensitäten der ersten und der zweiten Lichtquelle in einem vorbestimmten Zeitabstand jeweils gegengleich erhöht und erniedrigt werden, und die Leuchtkonfiguration des Lichtfeldes mithilfe der Steuereinheit durch Steuerung der ersten und der zweiten Lichtquelle so in Abhängigkeit eines ersten Konfigurationsparameters eingestellt wird, dass das Lichtfeld für das Auge eines durchschnittlichen erwachsenen Menschen bei Annäherung an das Lichtfeld bis zum Erreichen eines, von dem ersten Konfigurationsparameter abhängigen, vordefinierten Abstandes von dem Lichtfeld eine erste, durch eine im Wesentlichen gleich bleibende Lichtintensität gekennzeichnete, Leuchtcharakteristik aufweist und für das Auge eines durchschnittlichen erwachsenen Menschen bei Unterschreiten des vordefinierten Abstandes von dem Lichtfeld entsprechend einer zweiten Leuchtcharakteristik die erste von der zweiten Lichtquelle zumindest teilweise unterscheidbar ist und die wechselweise zunehmende und abnehmende Lichtintensität der Lichtquellen des Lichtfeldes bewusst wahrnehmbar ist, wobei der vordefinierte Abstand zumindest 0,5 Meter von dem Lichtfeld beträgt.

Nach einer besonderen Ausführungsform des erfindungsgemäßen Verfahrens weist die Steuereinheit eine Frequenzeinheit auf, durch welche die Lichtintensität der ersten und der zweiten Lichtquelle mit einer Frequenz in einem Bereich zwischen 0,1 Hz und 75 Hz, bevorzugt zwischen 0,1 Hz und 50 Hz, besonders bevorzugt zwischen 0,5 Hz und 10 Hz geändert wird.

Nach einer besonderen Ausführungsform des erfindungsgemäßen Verfahrens wird die Abstandsleuchte als Teil einer Außenbeleuchtung eines Fahrzeuges, beispielsweise als Rücklicht an der Rückseite des Fahrzeuges, eingesetzt.

Erfindungsgemäß wird als erster Konfigurationsparameter die Geschwindigkeit des Fahrzeuges aufgenommen.

Nach einer besonderen Ausführungsform des erfindungsgemäßen Verfahrens wird die aufgenommene Geschwindigkeit des Fahrzeuges mit einer Grenzgeschwindigkeit verglichen, und bei einer durch den Sensor aufgenommenen Geschwindigkeit unterhalb der Grenzgeschwindigkeit dem Lichtfeld, gegebenenfalls über Zwischenschaltung einer Hystereseschleife, eine im Wesentlichen konstante Lichtintensität zugewiesen.

Erfindungsgemäß ist ein mit der Steuereinheit und dem Lichtfeld verbundener erster Sensor zur Bestimmung des ersten Konfigurationsparameters vorgesehen.

Nach einer besonderen Ausführungsform des erfindungsgemäßen Verfahrens ist ein zweiter Sensor zur Bestimmung eines weiteren Parameters vorgesehen, wobei der weitere Parameter eine Fahrbahnbeschaffenheit und/oder eine Fahrzeugbeschaffenheit und/oder eine Uhrzeit und/oder ein Ortsbestimmungssignals und/oder eine Umgebungshelligkeit abbildet, und die Steuereinheit die Leuchtkonfiguration des Lichtfeldes in Abhängigkeit des weiteren Parameters ändert.

Erfindungsgemäß weist das Lichtfeld mit der ersten und der zweiten Lichtquelle und gegebenenfalls zusätzlichen Lichtquellen eine Anzahl von aktivierbaren Lichtquellen auf und wird durch die Steuerlogik durch eine ausgewählte Aktivierung von Lichtquellen aus der Anzahl der aktivierbaren Lichtquellen oder durch örtliche Verstellung einzelner aktiver Lichtquellen der Abstand zwischen den aktiven Lichtquellen in dem Lichtfeld in Abhängigkeit des ersten Konfigurationsparameters verändert.

Nach einer besonderen Ausführungsform der Erfindung ist die Leuchtkonfiguration des Lichtfeldes mittels der Steuereinheit durch Steuerung der ersten und der zweiten Lichtquelle so in Abhängigkeit des Konfigurationsparameters veränderbar, dass das Lichtfeld für einen durchschnittlichen erwachsenen Menschen bei Annäherung an das Lichtfeld bis zum Erreichen eines, von dem jeweiligen Konfigurationsparameter abhängigen, vordefinierten Abstandes von dem Lichtfeld eine erste, durch eine, über das Lichtfeld gemittelt, mit einer maximalen Schwankungsbreite von ± 20 %, vorzugsweise mit einer maximalen Schwankungsbreite von ± 10 % im Wesentlichen gleich bleibende Lichtintensität gekennzeichnete, Leuchtcharakteristik aufweist und das Lichtfeld für einen durchschnittlichen erwachsenen Menschen bei Annäherung an das Lichtfeld und bei Unterschreiten des vordefinierten Abstandes von dem Lichtfeld um mehr als 25 %, vorzugsweise um mehr als 30 %, eine zweite von der ersten verschiedene und durch eine, über das Lichtfeld gemittelt, mit einer minimalen Schwankungsbreite von ± 50 %, vorzugsweise mit einer minimalen Schwankungsbreite von ± 70 %, der Lichtintensität gekennzeichnete Leuchtcharakteristik aufweist.

Nach einer besonderen Ausführungsform der Erfindung beziehen sich die angegebenen Werte der Lichtintensität auf die Amplituden der Lichtstärken der Lichtquellen.

Nach einer besonderen Ausführungsform der Erfindung wird die erste und/oder die zweite Lichtquelle durch eine Anzahl von Leuchtdioden oder ein Display gebildet wird/werden.

Nach einer besonderen Ausführungsform der Erfindung sind die erste und die zweite Lichtquelle in einem Abstand voneinander angeordnet und jeweils getrennt durch die Steuereinheit ansteuerbar und weist die Steuereinheit eine Steuerlogik auf, mit welcher der ersten und der zweiten Lichtquelle jeweils ein zeitlich veränderlicher Verlauf der Lichtintensität zugeordnet wird und mit welcher die Lichtintensität der ersten und der zweiten Lichtquelle in einem vorbestimmten Zeitabstand jeweils gegengleich erhöht und erniedrigt werden kann, so dass bei Unterschreiten des vordefinierten Abstandes von dem Lichtfeld von mehr als 25 %, bevorzugt mehr als 50 % für den durchschnittlichen erwachsenen Menschen die wechselweise zunehmende und abnehmende Lichtintensität der Lichtquellen des Lichtfeldes bewusst wahrnehmbar ist.

Nach einer besonderen Ausführungsform der Erfindung ist zwischen der ersten und der zweiten Lichtquelle ein für Licht im Wesentlichen undurchlässiges optisches Begrenzungselement angeordnet. Definitionsgemäß wird dabei nach einer Ausführungsform als im Wesentlichen undurchlässig eine optische Durchlassrate von max. 10 % verstanden.

Nach einer besonderen Ausführungsform der Erfindung ist der Abstand zwischen der ersten und der zweiten Lichtquelle über eine geeignete Stelleinrichtung in Abhängigkeit des Konfigurationsparameters einstellbar.

Nach einer besonderen Ausführungsform der Erfindung ist eine dritte Lichtquelle vorgesehen. Nach einer besonderen Ausführungsform ist die dritte Lichtquelle getrennt von der ersten und der zweiten Lichtquelle ansteuerbar und in einem ersten Abstand zu der ersten Lichtquelle und in einem zweiten Abstand zu der zweiten Lichtquelle angeordnet, wobei der erste Abstand betragsmäßig größer als der zweite Abstand ist, und in Abhängigkeit des Konfigurationsparameters die zweite und/oder dritte Lichtquelle so ansteuerbar ist, dass bis zum Erreichen des, von dem Konfigurationsparameter abhängigen, vordefinierten Abstandes die zweite und/oder dritte Lichtquelle für den durchschnittlichen erwachsenen Menschen optisch nicht abgegrenzt von der ersten Lichtquelle bewusst wahrnehmbar ist und bei Unterschreiten des vordefinierten Sicherheitsabstandes um mehr als 25 %, insbesondere bei Unterschreiten des vordefinierten Sicherheitsabstandes um mehr als 50 %, die zweite und/oder dritte Lichtquelle optisch abgegrenzt von der ersten Lichtquelle bewusst wahrnehmbar ist.

Erfindungsgemäß ist als Konfigurationsparameter eine Geschwindigkeit eines Fahrzeuges vorgesehen und der Sensor zur Aufnahme derselben eingerichtet.

Nach einer besonderen Ausführungsform der Erfindung ist die Beleuchtungsvorrichtung als Teil der Außenbeleuchtung des Fahrzeuges, beispielsweise als ein Rücklicht an der Rückseite des Fahrzeuges, ausgeführt.

Nach einer besonderen Ausführungsform der Erfindung ist eine mit der Steuereinheit verbundene Speichereinheit vorgesehen, in welcher zu verschiedenen Geschwindigkeiten des Fahrzeuges jeweils die zugehörigen vordefinierten Steuerwerte zur Steuerung der Lichtkonfiguration des Lichtfeldes durch die Steuereinheit abgelegt sind.

Nach einer besonderen Ausführungsform der Erfindung ist eine Grenzgeschwindigkeit des Fahrzeuges als Aktivierungsschranke vorgesehen, wobei unterhalb der Grenzgeschwindigkeit eine annähernd konstante Lichtintensität des Leuchtfeldes, insbesondere entsprechend der Charakteristik der Lichtintensität der im Stand der Technik üblichen statischen Schlussleuchten, eingerichtet ist.

Nach einer besonderen Ausführungsform der Erfindung ist ein zweiter Sensor zur Bestimmung eines zweiten Parameters vorgesehen, wobei über den weiteren Parameter eine Fahrbahnbeschaffenheit und/oder eine Fahrzeugbeschaffenheit und/oder eine Uhrzeit und/oder ein Ortsbestimmungssignals und/oder die Umgebungshelligkeit abbildbar ist, und der Sensor zur Bestimmung des zweiten Parameters mit der Steuereinheit so verbunden ist, dass die Leuchtkonfiguration des Lichtfeldes in Abhängigkeit des weiteren Parameters änderbar ist.

Nach einer besonderen Ausführungsform der Erfindung nimmt dabei die Steuereinheit über den Sensor den Konfigurationsparameter auf und passt die Steuereinheit die Leuchtkonfiguration des Lichtfeldes durch Steuerung der ersten und der zweiten Lichtquelle in Abhängigkeit des Konfigurationsparameters so an, dass ein durchschnittlicher erwachsener Mensch bei Annäherung an das Lichtfeld bis zum Erreichen eines, von dem Konfigurationsparameter abhängigen, vordefinierten Abstandes eine erste, im Wesentlichen durch eine, über das Lichtfeld gemittelt, mit einer maximalen Schwankungsbreite von ± 20 %, bevorzugt mit einer maximalen Schwankungsbreite von ± 10 %, im Wesentlichen gleich bleibende Lichtintensität gekennzeichnete, Leuchtcharakteristik wahrnimmt und der durchschnittliche erwachsener Mensch bei Annäherung an das Lichtfeld und bei Unterschreiten des, von dem Konfigurationsparameter abhängigen, vordefinierten Abstandes von dem Lichtfeld von mehr als 25 %, vorzugsweise von mehr als 30 % eine zweite, von der ersten verschiedene und durch eine, über das Lichtfeld gemittelt, mit einer minimalen Schwankungsbreite von ± 50 % der Lichtintensität, vorzugsweise mit einer minimalen Schwankungsbreite von ± 70 % der Lichtintensität gekennzeichnete Leuchtcharakteristik bewusst wahrnimmt.

Nach der Erfindung sind die erste und die zweite Lichtquelle in einem Abstand voneinander angeordnet. Nach einer besonderen Ausführungsform werden die Lichtquellen jeweils getrennt durch die Steuereinheit angesteuert und ist der ersten und der zweiten Lichtquelle jeweils ein zeitlich veränderlicher Verlauf der Lichtintensität zugeordnet, wobei die Steuereinheit mittels einer Steuerlogik die Lichtintensität der ersten und der zweiten Lichtquelle in einem vorbestimmten Zeitabstand jeweils gegengleich erhöht und erniedrigt, so dass bei Unterschreiten des vordefinierten Abstandes von dem Lichtfeld von mehr als 25 %, bevorzugt um mehr als 50% für den durchschnittlichen erwachsenen Menschen die wechselweise zunehmende und abnehmende Lichtintensität der Lichtquellen des Lichtfeldes bewusst wahrnehmbar ist.

Nach einer besonderen Ausführungsform der Erfindung wird der Abstand zwischen der ersten und der zweiten Lichtquelle in Abhängigkeit des Konfigurationsparameters des Fahrzeuges eingestellt.

Nach einer besonderen Ausführungsform der Erfindung ist eine dritte Lichtquelle vorgesehen, die getrennt von der ersten und der zweiten Lichtquelle gesteuert wird und in einem ersten Abstand zu der ersten Lichtquelle und in einem zweiten Abstand zu der zweiten Lichtquelle angeordnet ist, wobei der erste Abstand betragsmäßig größer als der zweite Abstand ist, und in Abhängigkeit des Konfigurationsparameters des Fahrzeuges die zweite und/oder dritte Lichtquelle so angesteuert wird, dass bis zum Erreichen des, von dem Konfigurationsparameter abhängigen, vordefinierten Abstandes die zweite und/oder dritte Lichtquelle für den durchschnittlichen erwachsenen Menschen optisch nicht abgrenzt von der ersten Lichtquelle bewusst wahrgenommen wird und bei Unterschreiten des vordefinierten Abstandes um mehr als 25 % die dritte Lichtquelle optisch abgegrenzt von der ersten Lichtquelle bewusst wahrgenommen wird.

Nach einer besonderen Ausführungsform der Erfindung ist die Beleuchtungsvorrichtung als Teil der Außenbeleuchtung eines Fahrzeuges, beispielsweise als Rücklicht an der Rückseite des Fahrzeuges, ausgeführt. Nach einer besonderen Ausführungsform der Erfindung wird die Geschwindigkeit des Fahrzeuges als Konfigurationsparameter über den Sensor aufgenommen.

Nach einer besonderen Ausführungsform der Erfindung wird die über den Sensor aufgenommene Geschwindigkeit des Fahrzeuges mit einer Grenzgeschwindigkeit verglichen, und bei einer durch den Sensor aufgenommenen Geschwindigkeit unterhalb der Grenzgeschwindigkeit eine im Wesentlichen konstante Beleuchtung des Leuchtfeldes, entsprechend den üblichen statischen Schlussleuchten, eingestellt wird.

Nach einer besonderen Ausführungsform der Erfindung ist eine mit der Steuereinheit verbundene Speichereinheit vorgesehen, in welcher zu verschiedenen Geschwindigkeiten des Fahrzeuges jeweils der zugehörige vordefinierte Sicherheitsabstand bzw. Bremsweg abgelegt ist und die Steuereinheit in Abhängigkeit der über den Sensor aufgenommenen Geschwindigkeit aus der Steuereinheit den zugehörigen Sicherheitsabstand ausliest.

Nach einer besonderen Ausführungsform der Erfindung ist ein zweiter Sensor zur Bestimmung eines weiteren Parameters vorgesehen, wobei der weitere Parameter eine Fahrbahnbeschaffenheit und/oder eine Fahrzeugbeschaffenheit und/oder eine Uhrzeit und/oder ein Ortsbestimmungssignals und/oder einer Umgebungshelligkeit abbildet, wobei die Steuereinheit die Leuchtkonfiguration des Lichtfeldes in Abhängigkeit des weiteren Parameters ändert.

Nach einer besonderen Ausführungsform der Erfindung sollte die bauliche Ausführung unter Zuhilfenahme von Leuchtdioden und Prismen, beispielsweise durch eine geeignete Anzahl und Dichte der Anordnung von LEDs und/oder die Gestaltung der verwendeten Prismen, so gestaltet sein, dass das Auflösungsvermögen des durchschnittlichen menschlichen Auges dazu verwendet wird, eine angemessene Distanz zum Vordermann einzuhalten. Dadurch, dass das menschliche Auge bei zu naher Annäherung an das voraus fahrende Fahrzeug das Flackern oder Blinken eines Rücklichts des voraus fahrenden Fahrzeuges wahrnimmt, wird erwartet, dass sich der Fahrer des hinteren Fahrzeuges unterbewusst automatisch wieder vom voran fahrenden Fahrzeug distanziert. Durch diese Maßnahme kann beispielsweise zu knappes Auffahren bei höheren Geschwindigkeiten vermieden werden. Unter einer gewissen Geschwindigkeit soll die Funktion deaktiviert werden um im Stadtverkehr nicht unnötig zur Reizüberflutung beizutragen. Bei entsprechend guter Auflösung des Rücklichts ist es denkbar, verschiedenen Geschwindigkeiten verschiedene Leuchtcharakteristiken, beispielsweise verschiedene Blinkfrequenzen, zu zuordnen und in Abhängigkeit der Geschwindigkeit des Fahrzeuges bei Bedarf abzurufen.

Nach verschiedenen besonderen Ausführungsformen der Erfindung wird zur Erzeugung des optischen Reizes die Lichtintensität der Lichtquelle mit einer vorbestimmten Frequenz variiert. Nach einer besonderen Ausführungsform haben sich dabei Frequenzen unter 50 Hz, bevorzugt zwischen 0,1 Hz bis 50 Hz, besonders bevorzugt zwischen 0,5 Hz bis 10 Hz, beispielsweise eine Frequenz von 2 Hz, als besonders geeignet erwiesen.

Nach einer besonderen Ausführungsform der vorliegenden Erfindung erfolgt also eine Beeinflussung durch auffälliges, die Aufmerksamkeit des nachfahrenden Verkehrsteilnehmers, insbesondere kurzzeitig, erregendes, Blinken des Lichtfeldes, um Verkehrsteilnehmer, gegebenenfalls unterbewusst, dazu zu motivieren bzw. anzuleiten den Sicherheitsabstand einzuhalten.

Nach einer weiteren möglichen Ausführungsform der Erfindung wird der Abstand der Lichtquellen, beispielsweise von als Lichtquellen verwendeten LEDs vergrößert.

Die Erfindung ist nachfolgend anhand mehrerer Ausführungsbeispiele schematisch und beispielhaft - in nicht einschränkender Weise - erläutert. Es zeigen:
Fig. 1 eine mögliche Ausführungsform des Erfindungsgegenstandes in einer ersten schematischen Darstellung
Fig. 2 eine mögliche Ausführungsform des Erfindungsgegenstandes in einer zweiten schematischen Darstellung
Fig. 3 eine mögliche Ausführungsform des Erfindungsgegenstandes in einer dritten schematischen Darstellung
Fig. 4 eine mögliche Ausführungsform des Erfindungsgegenstandes in einer vierten schematischen Darstellung
Fig. 5 ein vereinfachtes Blockschaubild einer möglichen Ausführungsform des Erfindungsgegenstandes
Fig. 6 eine vereinfachte Darstellung eines Verfahrensablaufdiagrammes einer möglichen Ausführungsform des Erfindungsgegenstandes

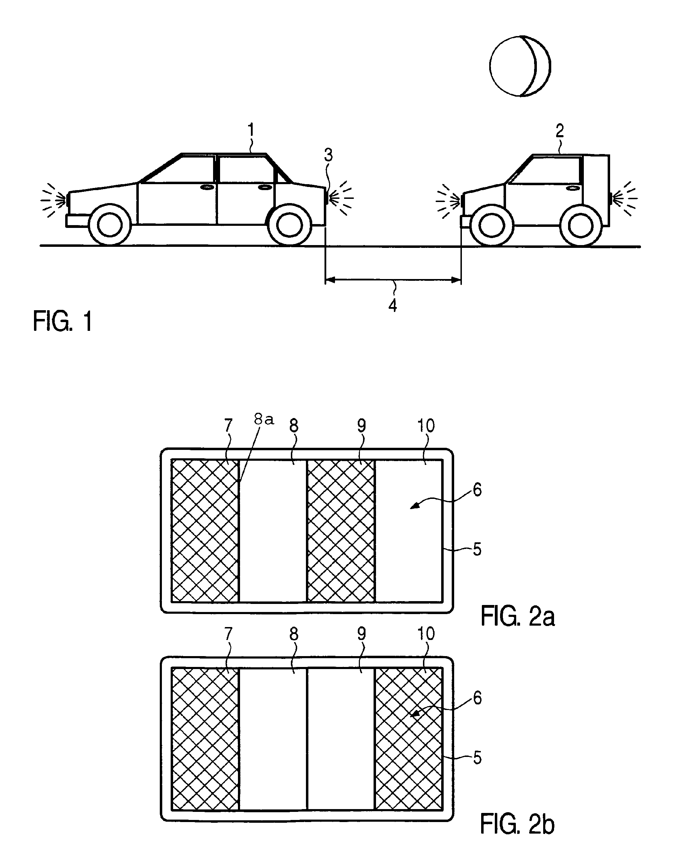

In Fig. 1 sind ein erstes Fahrzeug 1 sowie ein zweites Fahrzeug 2 schematisch dargestellt. Insbesondere bei Fahrten in der Nacht neigen Fahrer dazu sich an den Rücklichtern 3 vorausfahrender Fahrzeuge zu orientieren. Dabei wird nicht selten ein notwendiger Sicherheitsabstand 4, der bei einem unerwarteten Bremsmanöver des vorderen Fahrzeuges einen Auffahrunfall verhindern könnte, unterschritten. Um eine Einhaltung dieses Sicherheitsabstand besser gewährleisten zu können bzw. um den Fahrer eines nachkommenden Fahrzeuges besser auf das Unterschreiten des notwendigen Sicherheitsabstandes hinzuweisen, ist es gemäß einer Ausführungsform der vorliegenden Erfindung vorgesehen, die Leuchtcharakteristik des Rücklichts 3 beispielsweise durch fortwährendes Aus- und Einschalten oder durch fortwährende Änderung der Lichtintensität derart zu ändern, dass für den Fahrer des folgenden Fahrers bei Unterschreiten eines vorgegebenen Sicherheitsabstandes 4 ein optisches Blinken des Rücklichts bzw. eine andere Art der optischen "Unruhe" in dem Rücklicht bzw. dem Lichtfeld des Rücklichts beobachtbar ist. Nach einer besonderen Ausführungsform der Erfindung wird dabei beispielsweise die Frequenz des Blinkens des Rücklichts in Abhängigkeit der Geschwindigkeit des ersten Fahrzeuges 1 eingestellt, also beispielsweise die Frequenz bei einer Geschwindigkeitsänderung entsprechend erhöht oder erniedrigt. Das gewünschte Blinken des Rücklichts 3 kann beispielsweise ganz einfach durch fortwährendes Aus- und Einschalten der Lichtquelle, beispielsweise von verwendeten LEDs, erfolgen. Nach einer anderen Ausführungsform werden die Lichtquellen nicht aus- und eingeschaltet, sondern wird lediglich die Lichtintensität durch eine geeignete Steuerung in vorbestimmten Zeitabständen auf- und abgedimmt.

Für die Änderung der Lichtintensität des Rücklichts 3 wird eine Frequenz gewählt, bei welcher der Fahrer des nachfolgenden Fahrzeuges 2 bei Einhalten des notwendigen Sicherheitsabstandes 4 die fortwährende Änderung der Lichtintensität der einzelnen Lichtquellen des Rücklichts 3 aufgrund der beschränkten Auflösung des menschlichen Auges nicht mehr wahrnimmt. Dabei werden die Lichtquellen so abgestimmt, dass bei zunehmender Entfernung von dem Lichtfeld die beiden Lichtquellen für das durchschnittliche menschliche Auge nicht mehr als getrennte Lichtquellen auflösbar sind. Durch eine entsprechende Anpassung der zeitlichen Verläufe der Lichtintensitäten wird der Eindruck einer einzigen Lichtquelle mit im Wesentlichen gleich bleibender Lichtintensität verstärkt bzw. erweckt. Erst bei Unterschreiten des notwendigen Sicherheitsabstandes 4 bemerkt der Fahrer des nachfolgenden Fahrzeuges die Änderung der Lichtintensität der einzelnen Lichtquellen des Rücklichts 3 und wird dementsprechend aufmerksam. Folglich erfährt der nachkommende Fahrer je nach Abstand von dem Lichtfeld bei einer einzigen Leuchtkonfiguration des Lichtfeldes mehrere, insbesondere mindestens zwei, unterschiedliche Leuchtcharakteristiken.

Nach einer möglichen Ausführungsform kann die Änderung der Lichtintensität des Rücklichts 3, beispielsweise als Flackern des Rücklichts, dabei so eingestellt werden, dass der durchschnittliche erwachsene Mensch bei Unterschreiten des notwendigen Sicherheitsabstandes die Charakteristik dieses Signal als unangenehm empfindet und deshalb das Tempo seines Fahrzeuges verringert und den notwendigen Sicherheitsabstand, gegebenenfalls wieder, herstellt.

Nach einer anderen Ausführungsform des Erfindungsgegenstandes kann das menschliche Auge durch geeignete am Fahrzeug angeordnete optische Sensoren unterstützt werden, die eine Änderung der Charakteristik der Leuchtfelder des voraus fahrenden Fahrzeuges erkennen und dem Fahrer in geeigneter Weise anzeigen.

Eine weitere Möglichkeit die Aufmerksamkeit des nachfolgenden Fahrers zu wecken ist in Fig. 2 dargestellt. Hier weist das dargestellte Rücklicht 5 ein Lichtfeld 6 auf, welches aus mehrere Lichtquellen 7,8,9,10 besteht, die nach einer bevorzugten Ausführungsform durch im Wesentlichen für Licht nicht durchlässige Begrenzungselemente 8a (der Übersicht wegen ist nur ein einziges Begrenzungselement in Fig. 2a referenziert) von einander getrennt sind.

Wie in Fig. 2 (a) dargestellt ist die Leuchtkonfiguration des Lichtfeldes 6 bei sehr niedrigen Geschwindigkeiten, beispielsweise im Ortsgebiet so eingestellt, dass zwei Lichtquellen 7 und 9 des Rücklichts 5 Licht abgeben. Diese beiden Lichtquellen werden von einem Fahrer eines nachfolgenden Fahrzeuges erst bei Unterschreiten eines Sicherheitsabstandes X als getrennte Lichtquellen wahrgenommen.

Bei einer höheren Geschwindigkeit, wie in Fig. 2 (b) dargestellt, werden die Lichtquellen 7 und 10 aktiviert, die außerhalb und bis zu einem vorgegebenen Sicherheitsabstand Y vom nachfolgenden Fahrer, aufgrund der begrenzten Auflösung des menschlichen Auges als eine einzige Lichtquelle wahrgenommen werden, jedoch bei Annäherung an den notwendigen Sicherheitsabstand vom Auge zunehmend als zwei getrennte Lichtquellen 7 und 10 erkannt werden. Die Aufmerksamkeit des Fahrers wird folglich kurzzeitig auf dieses Signal und damit auf die erfolgte Annäherung an bzw. Unterschreitung des notwendigen Sicherheitsabstandes gelenkt. Der Sicherheitsabstand X ist kleiner als der Sicherheitsabstand Y.

Nach einer besonderen Ausführungsform werden die Lichtquellen 7 und 9 bzw. 7 und 10 so von einer Steuereinheit gesteuert, dass sie wechselweise ein und ausgeschalten werden. In dieser Konfiguration werden also bei einem genügend großen Abstand von dem Lichtfeld die beiden Lichtquellen 7 und 9 bzw. 7 und 10 als eine einzige Lichtquelle wahrgenommen. Durch das wechselweise Blinken der Lichtquellen 7 und 9 bzw. 7 und 10 erscheint diese einzige Lichtquelle aus der Entfernung damit als konstant leuchtend, wodurch sich bei Annäherung an das Lichtfeld und die sich dadurch ergebende Auflösung der beiden blinkenden getrennten Lichtquellen 7 und 9 bzw. 7 und 10 der Aufmerksamkeitseffekt noch verstärkt. Wie dem Fachmann leicht einsichtig ist, ist der Abstand ab dem die Lichtquellen 7 und 10 als einzige Lichtquelle wahrgenommen werden kann größer als jener für die Lichtquellen 7 und 9.

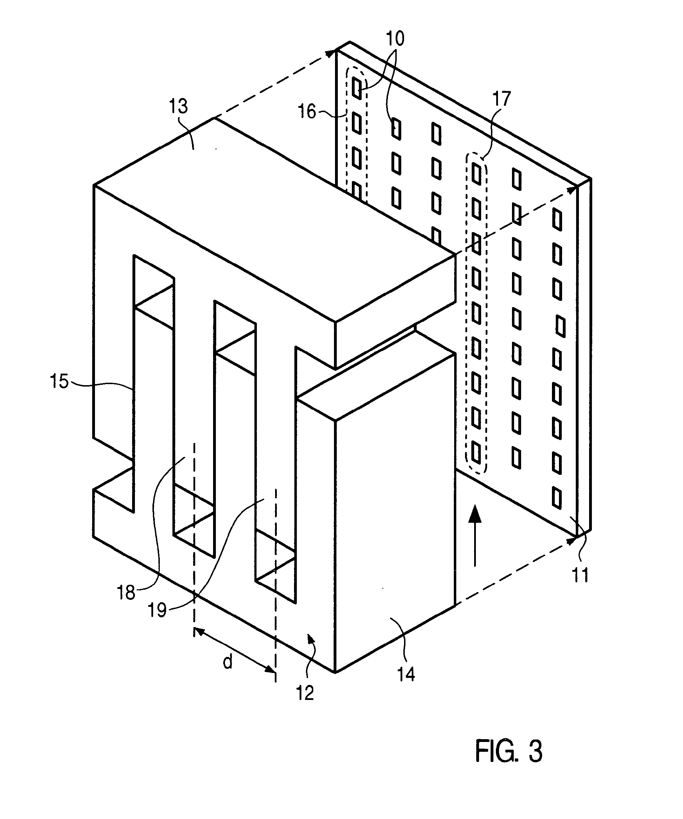

Fig. 3 zeigt eine weitere mögliche Ausführungsform der gegenständlichen Erfindung, wobei Leuchtdioden (LEDs) 10 als Lichtquellen eines Lichtfeldes 12 einer entsprechenden Beleuchtungsvorrichtung vorgesehen sind. Selbstverständlich können auch alle anderen aus dem Stand der Technik bekannten Lichtquellen verwendet werden.

Die Leuchtdioden 10 sind dabei nach einer bevorzugten Ausführungsform zeilen-und/oder spaltenförmig auf einer Platine 11 angeordnet und durch eine entsprechende Stromquelle (nicht dargestellt) versorgt.

Das Lichtfeld 12 wird durch eine Anordnung von zwei Prismen 13, 14 gebildet, welche kammartig in einander verschiebbar sind, wobei zwischen den Prismen 13, 14 Zwischenspalten 15 (der Übersichtlichkeit wegen ist nur ein einziger Zwischenspalt referenziert) gebildet wird, die für Licht im Wesentlichen nicht durchlässig ist. Jedem Prisma 13, 14 sind eine Anzahl von, hinter den Prismen 13, 14 angeordneten, LEDs zugeordnet. So sind dem ersten Prisma beispielsweise eine erste Anzahl 16 von LEDs (der Übersichtlichkeit wegen ist in Fig. 3 nur eine einzige Zeile von LEDs entsprechend referenziert) und dem zweiten Prisma eine zweite Anzahl 17 von LEDs (der Übersichtlichkeit wegen ist in Fig. 3 nur eine einzige Zeile von LEDs entsprechend referenziert) zugeordnet. Die erste und die zweite Anzahl 16, 17 von LEDs sind durch ein geeignetes Steuergerät/eine Steuereinheit (nicht dargestellt) getrennt voneinander ansteuerbar. Somit kann ein geeignetes Blinken des Lichtfeldes durch wechselweises Aus- und Einschalten der ersten und/oder zweiten Anzahl der LEDs 16, 17 verwirklicht werden. Dabei ist die Frequenz der Aktivierung und Deaktivierung der LEDs bzw. der entsprechenden Teile des Lichtfeldes 12 abstimmbar.

Nach einer weiteren Ausführungsform ist nicht nur die Frequenz, in welcher die LEDs ab- und eingeschaltet werden veränderbar, sondern auch welche LEDs zur Erzeugung der Leuchtkonfiguration angesteuert werden. Beispielsweise sind beliebige Gruppen von auf der Platine 11 angeordneten LEDs kombinierbar, wobei die gebildeten Gruppen von LEDs untereinander einen Abstand aufweisen und deshalb in dem Lichtfeld 12 vom Betrachter in einem geeignete Abstand als getrennte Lichtquellen, wobei jeweils eine Gruppe von LEDs für den Betrachter jeweils eine einzige Lichtquelle bildet, wahrgenommen werden. Zwar weisen beispielsweise die Stege 18, 19 eines jeden Prismas in dem Lichtfeld 12 jeweils einen unveränderbaren Abstand d voneinander auf, jedoch kann durch geeignete Gruppierung der LEDs und entsprechende getrennte Steuerung dieser Gruppen von LEDs erreicht werden, dass beispielsweise bei höheren Geschwindigkeiten nur jeder zweite Steg eines jeden Prismas in der vorgesehenen Frequenz ein- und ausgeschaltet wird.

Genau so können Bereiche, insbesondere Stege, eines ersten Prismas mit Bereichen, insbesondere Stegen, eines zweiten Prismas gekoppelt werden. Durch alle diese Maßnahmen kann die Auflösung des Lichtfeldes auf kleinere und größere Entfernungen hin angepasst werden.

Somit kann die Signalwirkung des Rücklichts auf einen weiten Bereich von zulässigen Sicherheitsabständen abgestimmt werden.

Bei der in Fig. 3 dargestellten Ausführungsform werden kammartige Prismenkörper ineinander verschachtelt. Die einzelnen Stege der Prismenkörper weisen die erforderlichen Stärken auf, um den gewünschten Sicherheitsabstand des nachfolgenden Fahrzeuges zu erreichen. Die Prismenkörper werden durch geeignete Leuchtmittel (z.B. LED) getrennt voneinander beleuchtet, und die eingestellte Beleuchtungsfrequenz soll zum erwünschten Effekt führen. Die ineinander verschachtelten Prismenkörper können auch andere Gestalt annehmen, z.B. ein Warndreieck oder Rufzeichen, solange die Ausführung derart ist, dass das Blinken ab der gewünschten Distanz nicht mehr wahrgenommen wird. Hierbei sollten möglichst gleichgroße Leuchtflächen bzw. eine gleichmäßige Ausleuchtung beachtet werden. Der Zwischenspalt oder Trennspalt 15 zwischen den Prismenkörpern 13 und 14 sollte undurchsichtig sein, um eine schärfere Trennung der Lichtquellen zu erhalten. Hinter den Prismenkörpern ist eine Trägerplatte, beispielsweise eine Platine 11 mit darauf angebrachten LEDs angeordnet. Nach einer beispielhaften Ausführungsform der Erfindung können die Anordnung der LEDs und die Gestaltung der Prismen frei gewählt werden, solange der Abstand d dem Abstand der LEDs auf der Platine entspricht. Schließlich kann der genannte Trennspalt 15 zwischen den Prismen bereits auf der Trägerplatte bzw. Platine 11 als Steg aufgegossen sein. Die Trägerplatte bzw. Platine 11 kann zusätzlich auch den Steuerkreis zur Generierung des wechselweisen Blinkens und zur Verarbeitung des Geschwindigkeitssignals inkludieren.

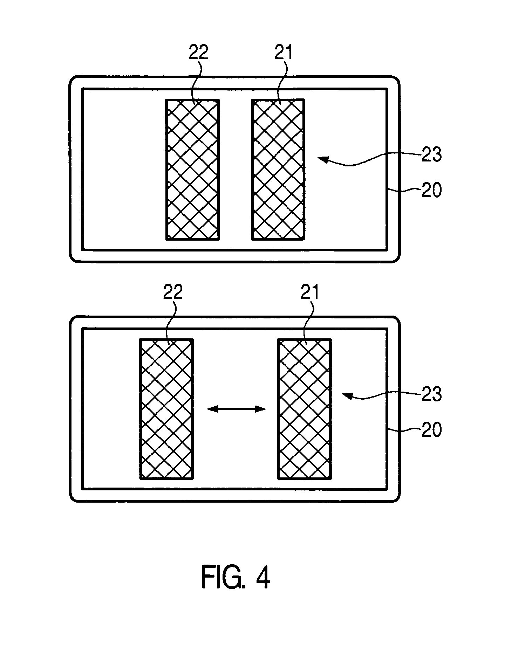

In Fig. 4 ist eine weitere Ausführungsform der vorliegenden Erfindung vorgestellt, nach der der Abstand zwischen zwei in einem Rücklicht 20 angeordnete Lichtquellen 21,22, die gemeinsam ein Lichtfeld 23 bilden, durch einen entsprechenden Aktuator (nicht dargestellt), beispielsweise einen mechanischen Stelltrieb, geeignet verändert, also verkleinert oder vergrößert, werden kann. Durch eine solche Maßnahme ist ebenfalls die Auflösung des Lichtfeldes durch den nachkommenden Fahrer und somit die Lichtcharakteristik des Lichtfeldes 23 veränderbar und insbesondere an die Geschwindigkeit des Fahrzeuges so anpassbar, dass durch das abgestimmte Lichtfeld 23 der Fahrer des nachkommenden Fahrzeuges erst bei Unterschreiten des notwendigen Sicherheitsabstandes zwei getrennte Lichtquellen 21, 22 in dem Lichtfeld 23 wahrnimmt und somit eine Signalwirkung entsteht.

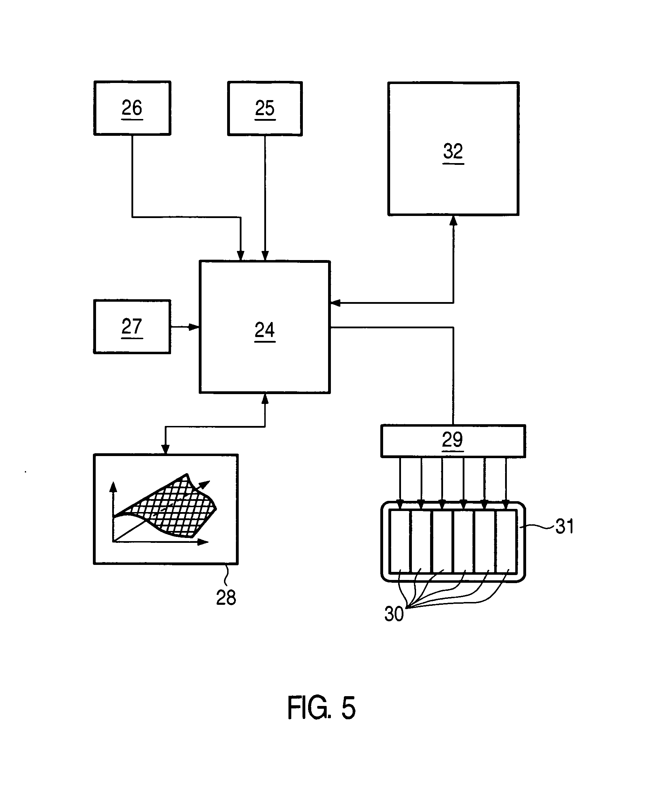

In Fig. 5 ist ein Blockschaubild einer möglichen Ausführungsform des Erfindungsgegenstandes dargestellt. Dabei ist eine Steuereinheit 24 vorgesehen, die mit einem Geschwindigkeitssensor 25, sowie mit einem Fahrbahnsensor 26 zur Detektion der Fahrbahnbeschaffenheit und einem Beladungssensor 27 zur Detektion des Beladungszustandes des Fahrzeuges verbunden ist. Auf Basis der durch diese Sensoren gewonnenen Daten wird in der Steuereinheit 24 ein zulässiger Sicherheitsabstand bestimmt. Die Bestimmung des Sicherheitsabstandes wird durch eine Speichereinheit 28 unterstützt, in welcher, beispielsweise mittels eines mehrdimensionalen Mappings, zu den entsprechenden aufgenommenen oder berechneten Parametern zulässige Sicherheitsabstände abgelegt sind. Mittels Interpolieren oder anderer analytischer oder numerischer Methoden wird nachfolgend der gewünschte Sicherheitsabstand bestimmt. Auf Basis dieses Sicherheitsabstandes wird eine geeignete Energieversorgungseinheit 29 angesteuert, mit welcher die Lichtquellen 30 eines Rücklichts 31, vorzugsweise getrennt voneinander, ansteuerbar sind. Nach einer weiteren bevorzugten Ausführungsform der Erfindung steht die Steuereinheit 24 mit einem anderen Steuergerät 32 des Fahrzeuges in Verbindung oder ist gegebenenfalls sogar in dieses integriert.

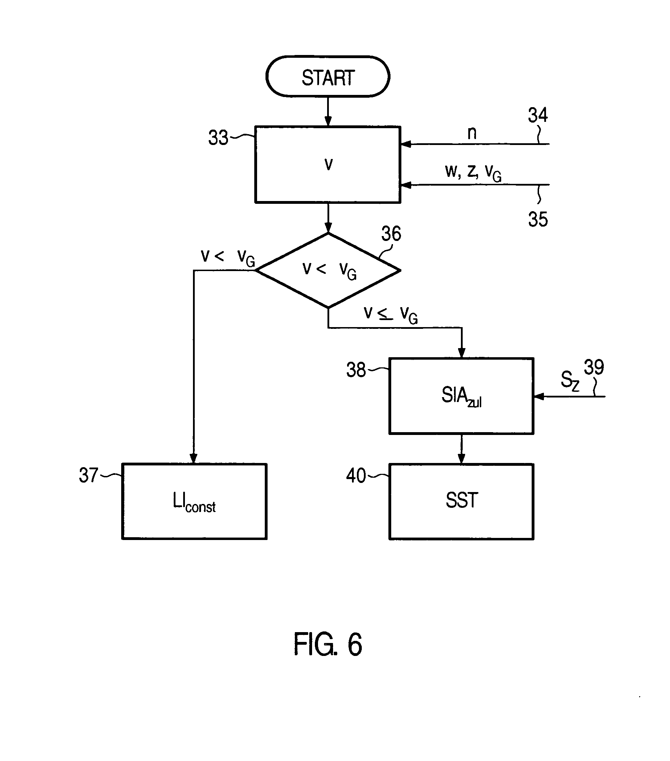

In Fig. 6 ist ein schematisches Ablaufprogramm eines Verfahrens zur Steuerung einer erfindungsgemäßen Beleuchtungsvorrichtung dargestellt. Dabei wird in einem ersten Schritt 33 mittels entsprechender Sensoren die Fahrzeuggeschwindigkeit v bestimmt. Dazu wird nach einer bevorzugten Ausführungsform über einen Sensor 34 die Raddrehzahl n des Fahrzeuges bestimmt und die Fahrzeuggeschwindigkeit v geeignet berechnet bzw. abgeschätzt. Darüber hinaus können nach einer weiteren Ausführungsform über geeignete Sensoren 35 der Beladungszustand w des Fahrzeuges und der Fahrbahnzustand z bestimmt werden. Nach weiteren möglichen Ausführungsformen sind als Sensoren beispielsweise ein Umgebungshelligkeitssensor und/oder ein GPS-Sensor zur Positionsbestimmung vorgesehen. Nachfolgend wird in einem weiteren Prozessschritt 36 überprüft, ob die Fahrzeuggeschwindigkeit v unterhalb einer Grenzgeschwindigkeit v_{G} liegt. Nach einer möglichen Ausführungsform entspricht v_{G} beispielsweise der erlaubten Höchstgeschwindigkeit im Ortsgebiet. Sollte die Fahrzeuggeschwindigkeit unterhalb dieser Grenzgeschwindigkeit liegen, wird in einem folgenden Prozessschritt 37 an dem Rücklicht beispielsweise eine konstante Lichtintensität LI_{const} eingestellt. Somit kann beispielsweise im Ortsgebiet oder bei niedrigen Geschwindigkeiten, insbesondere bei Geschwindigkeiten bei denen die Bildung von Kolonnen üblich ist, verhindert werden, dass die Aufmerksamkeit des Fahrers durch eine Aktivität des Rücklichts, beispielsweise ein Blinken des Rücklichts, unnötig abgelenkt wird. Eine solche Umschaltung kann über eine entsprechende Dämpfungsschaltung entsprechend gedämpft erfolgen, so dass der nachfolgende Fahrer durch die Änderung der Lichtcharakteristik des Rücklichtes nicht unnötig abgelenkt wird. Nach einer besonderen Ausführungsform ist dabei eine Hystereseschleife beim Aktivieren und Deaktivieren der konstanten Lichtintensität LI_{const} eingerichtet und verwendet. Ist die Fahrzeuggeschwindigkeit größer oder gleich der Grenzgeschwindigkeit wird in einem weiteren Prozessschritt 38 der zulässige Sicherheitsabstand SIA_{zul} bestimmt. Diese Bestimmung kann beispielsweise durch Bereitstellung entsprechender in einer Speichereinheit 39 abgelegter Werte S_{z} vereinfacht werden. Die Bestimmung des Sicherheitsabstands erfolgt nach einer Ausführungsform in Abhängigkeit der Geschwindigkeit des Fahrzeuges, dem Beladungszustand des Fahrzeuges sowie der Fahrbahnbeschaffenheit. Auf Basis in der Speichereinheit 39 festgelegter Werte können dann andere Sicherheitsabstände inter- oder extrapoliert werden. Schließlich wird in einem Prozessschritt 40 eine geeignete Steuerstrategie SST zu Steuerung der Lichtkonfiguration des Rücklichts bestimmt und angewandt.

Nach weiteren bevorzugten Ausführungsformen sind folgende weitere Ausgestaltungen des Erfindungsgegenstandes möglich:

Beispielsweise können zur Herstellung der Beleuchtungsvorrichtung Spritzgußkörper mit mehreren Kammern und zwei Leuchtmitteln, die jeweils zeilenweise mit zeilenförmigen Streuscheiben vor jeder Kammer aufgebaut sind, verwendet werden. Die Streuscheiben müssen dabei optisch so ausgelegt sein, dass die einzelnen Zeilen unter der Zielentfernung jedenfalls als solche wahrgenommen werden können.

Nach einer anderen Ausführungsform werden ineinander verschachtelte Prismenkörper, ähnlich wie in Fig. 3 dargestellt, verwendet, die optisch voneinander getrennt sind.

Nach einer anderen Ausführungsform werden Leuchtdioden, beispielsweise so genannte organische Leuchtdioden ("OLED"), die zeilenförmig angeordnet, verwendet, wobei die Leuchtdioden entweder auf einer Platine gelötet oder aus design-technischen Gründen direkt in einem entsprechendem Gehäuse angebracht werden.

Nach einer anderen Ausführungsform wird ein Display verwendet, wobei ein entsprechend leuchtstarkes Display gegebenenfalls ebenfalls zeilenartig angesteuert werden könnte. Auf einem Display ist es technisch einfach möglich andere Zeichen (Rufzeichen, Warndreieck, Schachbrettmuster, Spiralen, etc.) darzustellen, die entsprechend dem vorliegenden Erfindungsgegenstand aufgrund der eingestellten Auflösung erst unter der Zielentfernung wahrgenommen werden können. Displays können aufgrund der sehr hohen Auflösung auch dazu dienen, verschiedene Zeilendicken zu realisieren, was verschiedenen Zielentfernungen entspricht. Hierdurch kann sehr einfach eine Anpassung an die Fahrsituationen Überland, Autobahn bzw. reduzierte Geschwindigkeit auf der Autobahn, beispielsweise in einem Baustellenbereich, verwirklicht werden.

## Patentansprüche

1. Abstandsleuchte (3, 5) eines Fahrzeuges (1), wobei die Abstandsleuchte (3, 5) ein Lichtfeld (6, 12, 23) aufweist, welches gemäß einer Leuchtkonfiguration Licht abgibt und das Lichtfeld eine Anzahl von aktivierbaren Lichtquellen (7, 8, 9, 10, 11, 21, 22) und eine Steuereinheit (24) mit einer Steuerlogik zur Steuerung der Leuchtkonfiguration des Lichtfeldes (6, 12, 23) aufweist und ferner ein Sensor (25) zur Aufnahme der Geschwindigkeit (v) des Fahrzeuges vorgesehen ist, wobei in Abhängigkeit der Geschwindigkeit (v) des Fahrzeuges (1) ein gewünschter Abstand von zwei Lichtquellen bestimmbar ist und über die Steuereinheit (24) aus der Anzahl der aktivierbaren Lichtquellen (7, 8, 9, 10, 21, 22) eine erste und eine zweite Lichtquelle entsprechend dem gewünschten Abstand im Lichtfeld (6, 12, 23) aktivierbar sind, wobei der ersten und zweiten Lichtquelle ein zeitlich veränderlicher Verlauf ihrer Lichtintensität zuordenbar ist, **dadurch gekennzeichnet, daß** die Lichtintensitäten der ersten und der zweiten Lichtquelle zueinander jeweils gegengleich so erhöhbar und erniedrigbar sind, dass das Lichtfeld für das Auge eines durchschnittlichen erwachsenen Menschen bei Annäherung an das Lichtfeld (6, 12, 23) bis zum Erreichen eines, von der Geschwindigkeit (v) des Fahrzeuges abhängigen, vordefinierten Abstandes (4) von dem Lichtfeld eine erste, durch eine im Wesentlichen gleich bleibende Lichtintensität gekennzeichnete, Leuchtcharakteristik aufweist und für das Auge eines durchschnittlichen erwachsenen Menschen bei Unterschreiten des vordefinierten Abstandes (4) von dem Lichtfeld entsprechend einer zweiten Leuchtcharakteristik die erste von der zweiten Lichtquelle zumindest teilweise unterscheidbar und die wechselweise zunehmende und abnehmende Lichtintensität der Lichtquellen des Lichtfeldes bewusst wahrnehmbar ist, wobei der vordefinierte Abstand zumindest 0,5 Meter von dem Lichtfeld (6, 12, 23) beträgt.

2. Abstandsleuchte nach Anspruch 1, **dadurch gekennzeichnet, dass** die Steuereinheit (24) eine Frequenzeinheit aufweist, durch welche die Lichtintensität der ersten und der zweiten Lichtquelle mit einer Frequenz in einem Bereich zwischen 0,1 Hz und 75 Hz, bevorzugt zwischen 0,1 Hz und 50 Hz, besonders bevorzugt zwischen 0,5 Hz und 10 Hz geändert werden kann.

3. Abstandsleuchte nach Anspruch 1 oder 2, **dadurch gekennzeichnet, dass** die erste und/oder zweite Lichtquelle des Lichtfeldes (6, 12, 23) zumindest teilweise durch eine Anzahl von Leuchtdioden (10) oder ein Display gebildet wird/werden.

4. Abstandsleuchte nach einem der Ansprüche 1 bis 3, **dadurch gekennzeichnet, dass** die Abstandsleuchte (3, 5, 20) als Teil einer Außenbeleuchtung des Fahrzeuges, beispielsweise als Rücklicht an der Rückseite des Fahrzeuges (1), äusgeführt ist.

5. Abstandsleuchte nach einem der vorhergehenden Ansprüche, **dadurch gekennzeichnet, dass** eine vorbestimmte Grenzgeschwindigkeit (v_{G}) des Fahrzeuges als eine Aktivierungsschranke vorgesehen ist und das Lichtfeld (6, 12, 23) unterhalb der Grenzgeschwindigkeit (v_{G}) iene im Wesentlichen konstante Lichtintensität (LIconst) aufweist.

6. Abstandsleuchte nach Anspruch 5, **dadurch gekennzeichnet, dass** eine Aktivierungseinheit zur Aktivierung und/oder Deaktivierung der konstanten Lichtintensität (LIconst) des Lichtfeldes (6, 12, 23) vorgesehen ist und die Aktivierungseinheit eine Hystereseschleife aufweist.

7. Abstandsleuchte nach einem der vorhergehenden Ansprüche, **dadurch gekennzeichnet, dass** ein zweiter Sensor (26) zur Bestimmung eines zweiten Konfigurationsparameters vorgesehen ist, wobei über den zweiten Konfigurationsparameter eine Fahrbahnbeschaffenheit und/oder eine Fahrzeugbeschaffenheit und/oder eine Uhrzeit und/oder ein Ortsbestimmungssignals und/oder eine Umgebungshelligkeit abbildbar ist, und der Sensor zur Bestimmung des zweiten Konfigurationsparameters so mit der Steuereinheit (24) verbunden ist, dass die Leuchtkonfiguration des Lichtfeldes (6, 12, 23) in Abhängigkeit des zweiten Konfigurationsparameters änderbar ist.

8. Abstandsleuchte nach einem vorhergehenden Ansprüche, **dadurch gekennzeichnet, dass** die Abstandsleuchte (3, 5, 20) eine Verstelleinrichtung aufweist, durch welche der örtliche Abstand von Lichtquellen in dem Lichtfeld verstellbar ist.

9. Verfahren zur Steuerung einer Abstandsleuchte eines Fahrzeuges, wobei die Abstandsleuchte (3, 5, 20) ein Lichtfeld (6, 12, 23) aufweist, welches gemäß einer Leuchtkonfiguration Licht abgibt, wobei das Lichtfeld (6, 12, 23) eine Anzahl von aktivierbaren Lichtquellen (7, 8, 9, 10, 21, 22) und eine Steuereinheit (24) mit einer Steuerlogik zur Steuerung der Leuchtkonfiguration des Lichtfeldes (6, 12, 23) aufweist, und ferner die Geschwindigkeit (v) des Fahrzeuges (1) bestimmt und in Abhängigkeit der Geschwindigkeit (v) des Fahrzeuges (1) ein gewünschter Abstand von zwei Lichtquelle bestimmt wird sowie über die Steuereinheit (24) aus der Anzahl der aktivierbaren Lichtquellen (7, 8, 9, 10, 21, 22) eine erste und eine zweite Lichtquelle entsprechend dem gewünschten Abstand im Lichtfeld aktiviert werden, wobei der ersten und zweiten Lichtquelle jeweils ein zeitlich veränderlicher Verlauf ihrer Lichtintensität zugeordnet wird, **dadurch gekennzeichnet, daß** die Lichtintensitäten der ersten und der zweiten Lichtquelle zueinander gegengleich so erhöht und erniedrigt werden, dass das Lichtfeld (6, 12, 23) für das Auge eines durchschnittlichen erwachsenen Menschen bei Annäherung an das Lichtfeld (6, 12, 23) bis zum Erreichen eines, von der Geschwindigkeit (v) des Fahrzeuges (1) abhängigen, vordefinierten Abstandes (4) von dem Lichtfeldleine (6, 12, 23) erste, durch eine im Wesentlichen gleich bleibende Lichtintensität gekennzeichnete, Leuchtcharakteristik aufweist und für das Auge eines durchschnittlichen erwachsenen Menschen bei Unterschreiten des vordefinierten Abstandes (4) von dem Lichtfeld (6, 12, 23) entsprechend einer zweiten Leuchtcharakteristik die erste von der zweiten Lichtquelle zumindest teilweise unterscheidbar und die wechselweise zunehmende und abnehmende Lichtintensität der Lichtquellen des Lichtfeldes (6, 12, 23) bewusst wahrnehmbar ist, wobei der vordefinierte Abstand (4) zumindest 0,5 Meter von dem Lichtfeld beträgt.

10. Verfahren nach Anspruch 9, **dadurch gekennzeichnet, dass** die Steuereinheit (24) eine Frequenzeinheit aufweist, durch welche die Lichtintensität der ersten und der zweiten Lichtquelle mit einer Frequenz in einem Bereich zwischen 0,1 Hz und 75 Hz, bevorzugt zwischen 0,1 Hz und 50 Hz, besonders bevorzugt zwischen 0,5 Hz und 10 Hz geändert wird.

11. Verfahren nach Anspruch 9 oder 10, **dadurch gekennzeichnet, dass** die Abstandsleuchte (3, 5, 20) als Teil einer Außenbeleuchtung des Fahrzeuges, beispielsweise als Rücklicht an der Rückseite des Fahrzeuges, eingesetzt wird.

12. Verfahren nach der Ansprüche 9 bis 11, **dadurch gekennzeichnet, dass** die aufgenommene Geschwindigkeit (v) des Fahrzeuges mit einer Grenzgeschwindigkeit (v₄) verglichen wird, und, falls die aufgenommene Geschwindigkeit (v) kleiner als die Grenzgeschwindigkeit (v₄) des Lichtfeldes ist, gegebenenfalls über Zwischenschaltung einer Hystereseschleife, dem Lichtfeld (6, 12, 23) eine im Wesentlichen konstante Lichtintensität zugewiesen wird.

13. Verfahren nach einem der Ansprüche 9 bis 12, **dadurch gekennzeichnet, dass** ein ein zweiter Parameter bestimmt wird, wobei der zweite Parameter eine Fahrbahnbeschaffenheit und/oder eine Fahrzeugbeschaffenheit und/oder eine Uhrzeit und/oder ein Ortsbestimmungssignals und/oder eine Umgebungshelligkeit abbildet, und die Steuereinheit (24) die Leuchtkonfiguration des Lichtfeldes (6, 12, 23) in Abhängigkeit des zweiten Parameters ändert.

14. Verfahren nach einem der Ansprüche 9 bis 13, **dadurch gekennzeichnet, dass** der örtliche Abstand von Lichtquellen in dem Lichtfeld (6, 12, 23) über eine geeignete Verstelleinrichtung geändert wird.

## Claims

1. Distance light (3, 5, 20) of a vehicle (1), wherein the distance light (3, 5, 20) has a light field (6, 12, 23) which emits light according to a luminous configuration, and the light field has a number of activatable light sources (7, 8, 9, 10, 21, 22) and a control unit (24) with a control logic for controlling the luminous configuration of the light field (6, 12, 23), and furthermore a sensor (25) for recording the speed (v) of the vehicle is provided, wherein, depending on the speed (v) of the vehicle (1), a desired distance between two light sources is determinable and, from the number of the activatable light sources (7, 8, 9, 10, 21, 22), a first and a second light source are activatable using the control unit (24) according to the desired distance in the light field (6, 12, 23), wherein the first and second light sources are assignable a time-variable profile of their light intensity, **characterized in that** the light intensities of the first and the second light source with respect to one another are increasable and decreasable, in each case by the same amount in the opposite direction, such that, to the eye of an average adult person, when approaching the light field (6, 12, 23) up to the point where a predefined distance (4) from the light field is reached, which predefined distance is dependent on the speed (v) of the vehicle, the light field has a first luminous characteristic which is **characterized by** a substantially uniform light intensity, and to the eye of an average adult person, if the distance from the light field is below the predefined distance (4), and corresponding to a second luminous characteristic, the first light source can be at least partially differentiated from the second light source and the respectively increasing and decreasing light intensities of the light sources of the light field are consciously noticeable, with the predefined distance being at least 0.5 m from the light field (6, 12, 23).

2. Distance light according to Claim 1, **characterized in that** the control unit (24) has a frequency unit, by way of which the light intensity of the first and of the second light source can be changed with a frequency in a range of between 0.1 Hz and 75 Hz, preferably between 0.1 Hz and 50 Hz, particularly preferably between 0.5 Hz and 10 Hz.

3. Distance light according to Claim 1 or 2, **characterized in that** the first and/or second light source of the light field (6, 12, 23) is/are formed at least partially by a number of light-emitting diodes (10) or a display.

4. Distance light according to one of Claims 1 to 3, **characterized in that** the distance light (3, 5, 20) is configured to be part of the external lighting of the vehicle, for example as tail lights at the rear of the vehicle (1).

5. Distance light according to one of the preceding claims, **characterized in that** a predetermined limit speed (vG) of the vehicle is provided as an activation barrier and the light field (6, 12, 23) below the limit speed (vG) has a substantially constant light intensity (LIconst).

6. Distance light according to Claim 5, **characterized in that** an activation unit for activating and/or deactivating the constant light intensity (LIconst) of the light field (6, 12, 23) is provided and the activation unit has a hysteresis loop.

7. Distance light according to one of the preceding claims, **characterized in that** a second sensor (26) for determining a second configuration parameter is provided, wherein a road surface condition and/or a vehicle condition and/or a time of day and/or a position determination signal and/or an ambient brightness is imageable using the second configuration parameter, and the sensor for determining the second configuration parameter is connected to the control unit (24) such that the luminous configuration of the light field (6, 12, 23,) is variable in dependence on the second configuration parameter.

8. Distance light according to one of the preceding claims, **characterized in that** the distance light (3, 5, 20) has an adjustment device, by way of which the spatial distance between light sources in the light field is adjustable.

9. Method for controlling a distance light of a vehicle, wherein the distance light (3, 5, 20) has a light field (6, 12, 23), which emits light according to a luminous configuration, wherein the light field (6, 12, 23) has a number of activatable light sources (7, 8, 9, 10, 21, 22) and a control unit (24) with a control logic for controlling the luminous configuration of the light field (6, 12, 23), and furthermore the speed (v) of the vehicle (1) is determined, and, in dependence on the speed (v) of the vehicle (1), a desired distance between two light sources is determined, and, from the number of activatable light sources (7, 8, 9, 10, 21, 22), a first and a second light source are activated according to the desired distance in the light field using the control unit (24), wherein the first and second light sources are assigned in each case a time-variable profile of their light intensity, **characterized in that** the light intensities of the first and the second light source with respect to one another are increased and decreased, in each case by the same amount in the opposite direction, such that, to the eye of an average adult person, when approaching the light field (6, 12, 23) up to the point where a predefined distance (4) from the light field (6, 12, 23) is reached, which predefined distance is dependent on the speed (v) of the vehicle (1), the light field (6, 12, 23) has a first luminous characteristic which is **characterized by** a substantially uniform light intensity, and to the eye of an average adult person, if the distance from the light field (6, 12, 23) is below the predefined distance (4), and corresponding to a second luminous characteristic, the first light source can be at least partially differentiated from the second light source and the respective increasing and decreasing light intensities of the light sources of the light field (6, 12, 23) are consciously noticeable, with the predefined distance (4) being at least 0.5 m from the light field.

10. Method according to Claim 9, **characterized in that** the control unit (24) has a frequency unit, by way of which the light intensity of the first and of the second light source can be changed with a frequency in a range of between 0.1 Hz and 75 Hz, preferably between 0.1 Hz and 50 Hz, particularly preferably between 0.5 Hz and 10 Hz.

11. Method according to Claim 9 or 10, **characterized in that** the distance light (3, 5, 20) is used as part of the external lighting of the vehicle, for example as tail lights at the rear of the vehicle.

12. Method according to Claims 9 to 11, **characterized in that** the recorded speed (v) of the vehicle is compared to a limit speed (vG) and, if the recorded speed (v) is less than the limit speed (vG) of the light field, the light field (6, 12, 23) is assigned, possibly with the interconnection of a hysteresis loop, a substantially constant light intensity.

13. Method according to one of Claims 9 to 12, **characterized in that** a second parameter is determined, wherein the second parameter images a road surface condition and/or a vehicle condition and/or a time of day and/or a position determination signal and/or an ambient brightness, and the control unit (24) changes the luminous configuration of the light field (6, 12, 23) in dependence on the second parameter.

14. Method according to one of Claims 9 to 13, **characterized in that** the spatial distance between light sources in the light field (6, 12, 23) is varied using a suitable adjustment device.

## Revendications

1. Feu d'espacement (3, 5, 20) d'un véhicule (1), le feu d'espacement (3, 5, 20) présentant un champ lumineux (6, 12, 23) qui délivre de la lumière conformément à une configuration d'éclairage et le champ lumineux présentant une pluralité de sources de lumière (7, 8, 9, 10, 21, 22) activables et une unité de commande (24) munie d'une logique de commande pour commander la configuration d'éclairage du champ lumineux (6, 12, 23) et un capteur (25) destiné à enregistrer la vitesse (v) du véhicule étant en outre prévu, un espacement souhaité de deux sources de lumière pouvant être défini en fonction de la vitesse (v) du véhicule (1) et une première et une deuxième source de lumière parmi la pluralité de sources de lumière (7, 8, 9, 10, 21, 22) activables pouvant être activées dans le champ lumineux (6, 12, 23) par le biais de l'unité de commande (24) conformément à l'espacement souhaité, une évolution de l'intensité lumineuse qui varie dans le temps pouvant être associée à la première et à la deuxième source de lumière, **caractérisé en ce que** les intensité lumineuses de la première et de la deuxième source de lumière peuvent être augmentées et diminuées de manière diamétralement opposée l'une par rapport à l'autre de telle sorte que le champ lumineux, pour l'oeil d'une personne adulte moyenne qui s'approche du champ lumineux (6, 12, 23) jusqu'à atteindre un espacement prédéfini (4) du champ lumineux dépendant de la vitesse (v) du véhicule, présente une première caractéristique d'éclairage **caractérisée par** une intensité lumineuse pour l'essentiel constante et, pour l'oeil d'une personne adulte moyenne, lorsque l'espacement devient inférieur à l'espacement prédéfini (4) du champ lumineux, la première source de lumière peut être distinguée au moins partiellement de la deuxième conformément à une deuxième caractéristique d'éclairage et l'intensité lumineuse augmentant et diminuant en alternance des sources de lumière du champ lumineux peut être délibérément perçue, l'espacement prédéfini étant à au moins 0,5 mètres du champ lumineux (6, 12, 23).

2. Feu d'espacement selon la revendication 1, **caractérisé en ce que** l'unité de commande (24) présente une unité de fréquence par laquelle l'intensité lumineuse de la première et de la deuxième source de lumière peut être modifiée avec une fréquence dans une plage entre 0,1 Hz et 75 Hz, de préférence entre 0,1 Hz et 50 Hz et notamment de préférence entre 0,5 Hz et 10 Hz.

3. Feu d'espacement selon la revendication 1 ou 2, **caractérisé en ce que** la première et/ou la deuxième source de lumière du champ lumineux (6, 12, 23) est/sont au moins partiellement formée(s) par une pluralité de diodes électroluminescentes (10) ou par un afficheur.

4. Feu d'espacement selon l'une des revendications 1 à 3, **caractérisé en ce que** le feu d'espacement (3, 5, 20) est réalisé sous la forme d'une partie d'un éclairage extérieur du véhicule, par exemple sous la forme d'un feu arrière sur le côté arrière du véhicule (1).

5. Feu d'espacement selon l'une des revendications précédentes, **caractérisé en ce qu'**une vitesse limite (v_{G}) prédéfinie du véhicule est prévue comme une barrière d'activation et le champ lumineux (6, 12, 23) présente une intensité lumineuse sensiblement constante (LI_{const}) au-dessous de la vitesse limite (v_{G}).

6. Feu d'espacement selon la revendication 5, **caractérisé en ce qu'**une unité d'activation est prévue pour activer et/ou désactiver l'intensité lumineuse constante (LI_{const}) du champ lumineux (6, 12, 23) et l'unité d'activation présente une boucle à hystérésis.

7. Feu d'espacement selon l'une des revendications précédentes, **caractérisé en ce qu'**un deuxième capteur (26) est prévu pour déterminer un deuxième paramètre de configuration, une propriété de la chaussée et/ou une propriété du véhicule et/ou une heure et/ou un signal de localisation et/ou une luminosité ambiante pouvant être représenté(s) par le biais du deuxième paramètre de configuration, et le capteur étant relié avec l'unité de commande (24) en vue de déterminer le deuxième paramètre de configuration de telle sorte que la configuration d'éclairage du champ lumineux (6, 12, 23) peut être modifiée en fonction du deuxième paramètre de configuration.

8. Feu d'espacement selon l'une des revendications précédentes, **caractérisé en ce que** le feu d'espacement (3, 5, 20) présente un dispositif de positionnement par le biais duquel peut être réglé l'espacement local des sources de lumière dans le champ lumineux.

9. Procédé de commande d'un feu d'espacement d'un véhicule, le feu d'espacement (3, 5, 20) présentant un champ lumineux (6, 12, 23) qui délivre de la lumière conformément à une configuration d'éclairage, le champ lumineux (6, 12, 23) présentant une pluralité de sources de lumière (7, 8, 9, 10, 21, 22) activables et une unité de commande (24) munie d'une logique de commande pour commander la configuration d'éclairage du champ lumineux (6, 12, 23), et la vitesse (v) du véhicule (1) étant en outre déterminée et un espacement souhaité de deux sources de lumière étant défini en fonction de la vitesse (v) du véhicule (1) et une première et une deuxième source de lumière parmi la pluralité de sources de lumière (7, 8, 9, 10, 21, 22) activables étant activées dans le champ lumineux par le biais de l'unité de commande (24) conformément à l'espacement souhaité, une évolution de l'intensité lumineuse qui varie dans le temps étant respectivement associée à la première et à la deuxième source de lumière, **caractérisé en ce que** les intensité lumineuses de la première et de la deuxième source de lumière sont augmentées et diminuées de manière diamétralement opposée l'une par rapport à l'autre de telle sorte que le champ lumineux (6, 12, 23), pour l'oeil d'une personne adulte moyenne qui s'approche du champ lumineux (6, 12, 23) jusqu'à atteindre un espacement prédéfini (4) du champ lumineux (6, 12, 23) dépendant de la vitesse (v) du véhicule (1), présente une première caractéristique d'éclairage **caractérisée par** une intensité lumineuse pour l'essentiel constante et, pour l'oeil d'une personne adulte moyenne, lorsque l'espacement devient inférieur à l'espacement prédéfini (4) du champ lumineux (6, 12, 23), la première source de lumière peut être distinguée au moins partiellement de la deuxième conformément à une deuxième caractéristique d'éclairage et l'intensité lumineuse augmentant et diminuant en alternance des sources de lumière du champ lumineux (6, 12, 23) peut être délibérément perçue, l'espacement prédéfini (4) étant à au moins 0,5 mètres du champ lumineux.

10. Procédé selon la revendication 9, **caractérisé en ce que** l'unité de commande (24) présente une unité de fréquence par laquelle l'intensité lumineuse de la première et de la deuxième source de lumière est modifiée avec une fréquence dans une plage entre 0,1 Hz et 75 Hz, de préférence entre 0,1 Hz et 50 Hz et notamment de préférence entre 0,5 Hz et 10 Hz.

11. Procédé selon la revendication 9 ou 10, **caractérisé en ce que** le feu d'espacement (3, 5, 20) est utilisé en tant que partie d'un éclairage extérieur du véhicule, par exemple en tant que feu arrière sur le côté arrière du véhicule.

12. Procédé selon l'une des revendications 9 à 11, **caractérisé en ce que** la vitesse (v) enregistrée du véhicule est comparée avec une vitesse limite (v_{G}) et, dans le cas où la vitesse (v) enregistrée est inférieure à la vitesse limite (v_{G}) du champ lumineux, une intensité lumineuse sensiblement constante est affectée au champ lumineux (6, 12, 23), le cas échéant en intercalant une boucle à hystérésis.

13. Procédé selon l'une des revendications 9 à 12, **caractérisé en ce qu'**un deuxième paramètre est déterminé, le deuxième paramètre représentant une propriété de la chaussée et/ou une propriété du véhicule et/ou une heure et/ou un signal de localisation et/ou une luminosité ambiante, et l'unité de commande (24) modifie la configuration d'éclairage du champ lumineux (6, 12, 23) en fonction du deuxième paramètre.

14. Procédé selon l'une des revendications 9 à 13, **caractérisé en ce que** l'espacement local des sources de lumière dans le champ lumineux (6, 12, 23) est modifié par le biais d'un dispositif de positionnement approprié.
